# EUROPEAN PATENT APPLICATION

(11) **EP 4 663 331 A1**
(43) Date of publication of application: **17.12.2025**
(21) Application number: 23927573.8
(22) Date of filing: 31.10.2023
(51) Int. Cl.: B23K 9/16, B23K 35/30, C22C 38/00, C22C 38/04, C22C 38/58

(54) **GAS METAL ARC WELDED JOINT AND METHOD FOR PRODUCING SAME**

(30) Priority: 13.03.2023 JP 2023038286; 28.09.2023 JP 2023167497
(71) Applicant: JFE Steel Corporation, Tokyo 100-0011 (JP)
(72) Inventor: ANDO, Akiyoshi, Tokyo 100-0011 (JP); WATANABE, Kazufumi, Tokyo 100-0011 (JP)
(74) Representative: Grünecker Patent- und Rechtsanwälte PartG mbB
(86) International application number: PCT/JP2023/039227
(87) International publication number: WO 2024/189959

(57) **Abstract**

The present invention provides, in a simple way, a gas metal arc weld joint of pieces of high-Mn steel that achieves high strength and excellent cryogenic toughness and a production method thereof. The gas metal arc weld joint is created by forming a weld metal between pieces of a steel material of austenitic steel with a high Mn content containing Mn: 18.0 to 30.0% in mass% using a shielding gas and a solid wire. The chemical composition of the weld metal includes, in mass%, C: 0.15 to 0.80%, Si: 0.10 to 1.00%, Mn: 17.0 to 30.0%, P: 0.030% or less, S: 0.030% or less, Al: 0.001 to 0.100%, Cr: 0.4 to 5.5%, Mo: 0.01 to 3.50%, Ni: 0.01 to 10.00%, and N: 0.0200% to 0.1500%, with the balance being composed of Fe and unavoidable impurities. The method produces the gas metal arc weld joint by including nitrogen gas in the shielding gas at a predetermined concentration or increasing the content of N in the solid wire.

## Description

### Technical Field

The present invention relates to a gas metal arc weld joint of pieces of a steel material that is created by forming a weld metal using a shielding gas and a solid wire, and a production method thereof, and relates particularly to a gas metal arc weld joint of pieces of an austenitic steel material with a high Mn content to be used in cryogenic environments, and a production method thereof.

### Background Art

In recent years, environmental regulations have been becoming stringent. Against this background, there is a growing demand for liquefied natural gas (hereinafter also referred to as "LNG"), which is said to be a clean fuel as it does not contain sulfur and therefore does not generate air pollutants such as sulfide and sulfur oxide. Containers (tanks) for transporting or holding the LNG to transport or store the LNG are required to maintain excellent cryogenic impact toughness at temperatures not higher than -162°C, the liquefying temperature of the LNG.

Due to this necessity of maintaining excellent cryogenic impact toughness, aluminum alloys, 9%-Ni-steel, austenitic stainless steel, etc. have been conventionally used as the materials of containers (tanks).

However, aluminum alloys have low tensile strength, which makes it necessary to design the wall of a structure to be thick. Another problem is low welding workability. As for 9%-Ni-steel, it is necessary to use an expensive Ni-base material as the welding material, which is economically disadvantageous. One problem with austenitic stainless steel is that it is not only expensive but also has low base metal strength.

In view of these problems, consideration has been recently given to adopting steel materials with high Mn contents (hereinafter also referred to as "high-Mn steel") that contain Mn within a range of 10 to 35 mass% as the materials of containers for transporting or holding the LNG. High-Mn steel is characterized in that even at cryogenic temperatures, its metallographic structure has an austenite phase and does not develop a brittle fracture, and in that it has high strength compared with austenitic stainless steel. However, high-Mn-steel base metal has its strength improved by work hardening through rolling. On the other hand, the strength is low at a weld that is not influenced by work hardening through rolling compared with in the base metal. Thus, the problem is that the intrinsic strength of the high-Mn steel cannot be fully leveraged. It has been desired to develop a welding material and a welding technology that can produce a weld equivalent in strength to high-Mn-steel base metal.

For example, Patent Literature 1 discloses a method that adjusts the chemical composition of a welding material (solid wire) and welding conditions with respect to the chemical composition of a high-Mn steel material and controls a ratio of dilution of the steel material with weld metal material so as to meet specified values for the strength and the cryogenic impact toughness of a weld.

### Citation List

### Patent Literature

Patent Literature 1: International Publication No. WO 2020/203335

### Summary of Invention

### Technical Problem

However, the method described in Patent Literature 1 requires selecting the welding material according to the high-Mn steel material. In this respect, given the cost and the process of producing the welding material, it is difficult to design and produce the welding material each time according to the steel material. Another problem is that the necessity of finely controlling the welding conditions complicates the implementation and management of welding.

The present invention aims to solve these problems and provide, in a simple way, a gas metal arc weld joint of pieces of high-Mn steel that achieves high strength and excellent cryogenic toughness without requiring fine adjustment of the ingredients of a welding wire or adjustment of welding conditions, and a production method thereof.

### Solution to Problem

To achieve the above object, the present inventors vigorously studied the influence of various elements on the properties of a weld metal part, and found that nitrogen (N) was particularly effective as an element that could be added to a weld from other than the base metal and the welding material (solid wire) and that contributed to improving the strength. Moreover, the present inventors obtained the fact that increasing the content of N in the weld metal had a narrowing effect on the solid-liquid coexisting temperature range as well as an inhibiting effect on hot cracks that form at the weld metal part.

The present inventors further found that N could be stably dissolved in the weld metal as a solid solution also from N in the solid wire, instead of from nitrogen gas contained in the shielding gas, by setting the content of N in the solid wire to more than 0.1200 mass% but 0.4000 mass% or less.

The present invention has been completed after further studies were additionally conducted based on these insights, and is summarized as follows:
[1] A gas metal arc weld joint of pieces of a steel material that is created by forming a weld metal using a shielding gas and a solid wire, wherein:
   the steel material is austenitic steel with a high Mn content;
   a chemical composition of the steel material includes, in mass%,
      C: 0.10% to 0.70%,
      Si: 0.05% to 1.00%,
      Mn: 18.0% to 30.0%,
      P: 0.030% or less,
      S: 0.007% or less,
      Al: 0.010% to 0.070%,
      Cr: 2.50% to 7.00%,
      N: 0.0050% to 0.0500%, and
      O (oxygen): 0.0050% or less, and
   further includes, optionally and selectively, at least one type selected from the group consisting of
      Mo: 0.01% to 2.00%,
      V: 0.01% to 2.00%,
      W: 0.01% to 2.00%,
      Ni: 0.01% to 4.00%,
      REM: 0.0010% to 0.0200%, and
      B: 0.0003% to 0.0030%,
   with the balance being composed of Fe and unavoidable impurities; and
   a chemical composition of the weld metal includes, in mass%,
      C: 0.15% to 0.80%,
      Si: 0.10% to 1.00%,
      Mn: 17.0% to 30.0%,
      P: 0.030% or less,
      S: 0.030% or less,
      Al: 0.001% to 0.100%,
      Cr: 0.4% to 5.5%,
      Mo: 0.01% to 3.50%,
      Ni: 0.01% to 10.00%, and
      N: 0.0200% to 0.1500%, and
   further includes, optionally and selectively, at least one type selected from the group consisting of
      V: 0.01% to 1.00%,
      Ti: 0.010% to 1.000%,
      Nb: 0.010% to 1.000%,
      W: 0.01% to 1.00%,
      Cu: 0.01% to 1.00%, and
      B: 0.0015% or less,
   with the balance being composed of Fe and unavoidable impurities.
[2] The gas metal arc weld joint according to [1] described above, wherein the weld metal has the following mechanical properties: yield stress as 0.2% proof stress of 400 MPa or higher, tensile strength of 600 MPa or higher, and Charpy impact absorbing energy ᵥE₋₁₉₆ of 28 J or higher.
[3] A method of producing the gas metal arc weld joint according to [1] or [2] described above, wherein
   [A] the shielding gas is a gas that contains, in vol%, 1.0% or more but less than 30.0% nitrogen gas, with the balance being composed of carbon dioxide gas and unavoidable impurities, or
   [B] the shielding gas is a gas that contains, in vol%, 1.0% or more but less than 30.0% nitrogen gas and 56.0% or more but less than 79.2% Ar gas, with the rest being composed of carbon dioxide gas and unavoidable impurities.
[4] The method of producing the gas metal arc weld joint according to [3] described above, wherein a content of N in the solid wire is 0.1200% or less in mass%.
[5] A method of producing the gas metal arc weld joint according to [1] or [2] described above, wherein
   the shielding gas is a gas composed of carbon dioxide gas and unavoidable impurities or a gas composed of Ar gas, carbon dioxide gas, and unavoidable impurities, and
   a content of N in the solid wire is within a range of more than 0.1200% but 0.4000% or less in mass%.

### Advantageous Effects of Invention

The present invention offers remarkable industrial advantages by being able to easily produce a weld joint that can achieve further improvement of the strength of the weld metal and enhanced inhibition of the formation of hot cracks as a weld joint for high-Mn steel to be used in cryogenic environments.

### Brief Description of Drawings

[Fig. 1] is a schematic view showing one example of the shape of a groove in a gas metal arc weld joint of the present invention.
[Fig. 2] is a schematic view showing one example of a sampling position of a test specimen for a Charpy impact test.
[Fig. 3] is a graph showing changes in 0.2% proof stress relative to the content of N in weld metal according to changes in the content of nitrogen gas.
[Fig. 4] is a graph showing changes in tensile strength relative to the content of N in the weld metal according to changes in the content of the nitrogen gas.
[Fig. 5] is a graph showing changes in 0.2% proof stress relative to the content of N in the weld metal according to changes in the content of N in a wire.
[Fig. 6] is a graph showing changes in tensile strength relative to the content of N in the weld metal according to changes in the content of N in the wire.

### Description of Embodiment

In the following, an embodiment of the present invention will be specifically described.

### <Gas Metal Arc Weld joint>

A weld joint according to the embodiment is a weld joint for high-Mn steel to be used in cryogenic environments. The weld joint according to the embodiment is a gas metal arc weld joint that can achieve further improvement of the strength of the weld metal and enhanced inhibition of the formation of hot cracks, without any changes to the base metal or the welding material. Specifically, the weld joint according to the embodiment is a weld joint produced by gas metal arc welding in accordance with the specifications of JIS Z 3001-7: 2018 except for the type of the shielding gas. In a tensile test of the weld metal produced based on JIS Z 3111: 2005, the weld joint according to the embodiment achieves yield stress as 0.2% proof stress of 400 MPa or higher and tensile strength of 600 MPa or higher, which is an average of 20 MPa or more improvement in the yield stress and the tensile strength at room temperature from those of an ordinary gas metal arc weld joint. For the ordinary gas metal arc weld joint, 99.5% or more carbon dioxide gas, or 80% Ar gas and 20% carbon dioxide gas are used as the shielding gas. Moreover, in a Charpy impact test at a test temperature of -196°C of the weld metal of the weld joint produced based on JIS Z 3128: 2017, the weld metal exhibits absorbing energy (hereinafter also referred to as "ᵥE-₁₉₆") of 28 J or higher. Thus, the weld joint has excellent cryogenic impact toughness and is unlikely to develop hot cracks.

### [High-Mn Steel (Austenitic Steel with High Mn Content)]

First, a steel material constituting the base metal will be described. The steel material to be used is austenitic steel with a high Mn content. In the embodiment, "high Mn content" of the austenitic steel with a high Mn content means that the content of Mn among the chemical composition of the steel material is within a range of 18.0% to 30.0% in mass%. "Austenitic steel" of the austenitic steel with a high Mn content means a steel material of which the base phase constituting the main phase of the metallographic structure is an austenite phase. That is, when the crystal structure of the steel material is a body-centered cubic structure (bcc), the steel material may develop a brittle fracture in a low-temperature environment, which makes it unsuitable for use in a low-temperature environment. Thus, when use in a low-temperature environment is assumed, it is essential that the crystal structure of the base phase of the metallographic structure of the steel material is an austenite structure with a face-centered cubic structure (fcc). That "the base phase is an austenite phase" means that the austenite phase accounts for 90% or more as an area ratio. The rest other than the austenite phase is a ferrite phase or a martensite phase, or precipitates, such as carbide. The austenite phase accounts for more preferably 95% or more, and even more preferably 100%.

### [Basic Composition of Steel Material]

Here, the chemical composition of the steel material according to the embodiment will be described next. In the following description, unless otherwise noted, "%" for "chemical composition" means "mass%."

The steel material used in the embodiment is the above-described high-Mn steel material containing 18.0% to 30.0% Mn, and the other basic composition is as follows. C: 0.10% to 0.70%, Si: 0.05% to 1.00%, P: 0.030% or less, S: 0.007% or less, Al: 0.010% to 0.070%, Cr: 2.50% to 7.00%, N: 0.0050% to 0.0500%, and O (oxygen): 0.0050% or less. The balance of the chemical composition of this high-Mn steel is composed of Fe, an optionally selected composition, and unavoidable impurities. Reasons for restricting the chemical composition are as follows.

### [C: 0.10% to 0.70%]

C is an inexpensive and important element that has an action of stabilizing the austenite phase and improving the cryogenic impact toughness. To obtain this effect, the content of C should be 0.10% or more. The content of C is preferably 0.20% or more, more preferably 0.25% or more, even more preferably 0.30% or more, and most preferably 0.35% or more. On the other hand, if more than 0.70% C is contained, Cr carbide is excessively formed, which degrades the cryogenic impact toughness. Therefore, the content of C should be 0.70% or less. The content of C is preferably 0.65% or less, more preferably 0.63% or less, even more preferably 0.61% or less, and most preferably 0.60% or less.

### [Si: 0.05% to 1.00%]

Si is an element that acts as a deoxidizer, and dissolves in the steel as a solid solution and contributes to increasing the strength of the steel material through solid-solution strengthening. To obtain this effect, the content of Si should be 0.05% or more. The content of Si is preferably 0.07% or more, more preferably 0.10% or more, even more preferably 0.15%, and most preferably 0.20% or more. On the other hand, if more than 1.00% Si is contained, the weldability degrades. Therefore, the content of Si should be 1.00% or less. The content of Si is preferably 0.80% or less, more preferably 0.70% or less, even more preferably 0.65% or less, and most preferably 0.60% or less.

### [Mn: 18.0% to 30.0%]

Mn is a relatively inexpensive element having an action of stabilizing the austenite phase, and is an important element for achieving both high strength and excellent cryogenic impact toughness at the same time. Obtaining this effect requires 18.0% or more Mn to be contained. Therefore, the content of Mn should be 18.0% or more. The content of Mn is preferably 20.0% or more, more preferably 22.0% or more, and even more preferably 24.0% or more. On the other hand, containing more than 30.0% Mn is economically disadvantageous, as the effect of improving the cryogenic impact toughness saturates and then an effect commensurate with the content cannot be expected. Moreover, containing Mn in a large amount exceeding 30.0% causes degradation of the cuttability, as well as promotes Mn segregation and formation of stress corrosion cracks. Therefore, the content of Mn should be 30.0% or less. The content of Mn is preferably 29.0% or less, more preferably 28.5% or less, and even more preferably 28.0% or less.

### [P: 0.030% or less]

P is an element that segregates at grain boundaries as impurities and forms a starting point of formation of a stress corrosion crack. In this embodiment, it is preferable that P be reduced as much as possible, while 0.030% or less P is allowable. Therefore, the content of P should be 0.030% or less. The content of P is preferably 0.028% or less, more preferably 0.024% or less, even more preferably 0.020% or less, and most preferably 0.015% or less. On the other hand, while this is not to restrict the lower limit of the content of P, making the content of P as extremely low as less than 0.002% requires prolonged refining, which may lead to an increase in the refining cost. From an economical viewpoint, therefore, the content of P is preferably 0.002% or more.

### [S: 0.007% or less]

S is present in the steel as a sulfide-based inclusion and degrades the ductility and the cryogenic impact toughness of the steel material and the weld metal. For this reason, it is desirable that S be reduced as much as possible, while 0.007% or less S is allowable. Therefore, the content of S should be 0.007% or less. The content of S is preferably 0.005% or less, and more preferably 0.004% or less. On the other hand, while this is not to restrict the lower limit of the content of S, making the content of S as extremely low as less than 0.0005% requires prolonged refining, which may lead to an increase in the refining cost. From an economical viewpoint, therefore, the content of S is preferably 0.0005% or more.

### [Al: 0.010% to 0.070%]

Al is an element that acts as a deoxidizer and is most widely used in molten steel deoxidation process of steel materials. To obtain this effect, the content of Al should be 0.010% or more. The content of Al is preferably 0.020% or more, and more preferably 0.030% or more. On the other hand, if more than 0.070% Al is contained, the Al gets mixed into the weld metal part during welding and degrades the toughness of the weld metal. Therefore, the content of Al should be 0.070% or less. The content of Al is preferably 0.060% or less, and more preferably 0.050% or less.

### [Cr: 2.50% to 7.00%]

Cr is an element that stabilizes the austenite phase and thereby effectively contributes to improving the cryogenic impact toughness and improving the strength of the steel material. Moreover, Cr is an effective element for forming a fine crystal region. To obtain these effects, the content of Cr should be 2.50% or more. The content of Cr is preferably 3.00% or more, more preferably 3.30% or more, even more preferably 3.50% or more, and most preferably 4.00% or more. On the other hand, if more than 7.00% Cr is contained, Cr carbide forms, resulting in degradation of the cryogenic impact toughness and the resistance to stress corrosion cracking. Therefore, the content of Cr should be 7.00% or less. The content of Cr is preferably 6.80% or less, more preferably 6.50% or less, and even more preferably 6.00% or less.

### [N: 0.0050% to 0.0500%]

N is an element that has an action of stabilizing the austenite phase and effectively contributes to improving the cryogenic impact toughness. To obtain this effect, the content of N should be 0.0050% or more. The content of N is preferably 0.0060% or more, more preferably 0.0070% or more, and even more preferably 0.0080% or more. On the other hand, if more than 0.0500% N is contained, nitride or carbonitride coarsens in the producing process of the steel material, resulting in degradation of the cryogenic impact toughness. Therefore, the content of N should be 0.0500% or less. The content of N is preferably 0.0450% or less, more preferably 0.0400% or less, and even more preferably 0.0350% or less.

### [O (oxygen): 0.0050% or less]

O (oxygen) is present in the steel as an oxide-based inclusion and degrades the cryogenic impact toughness of the steel material. For this reason, it is preferable that O (oxygen) be reduced as much as possible, while 0.0050% or less O (oxygen) is allowable. Therefore, the content of O (oxygen) should be 0.0050% or less. The content of O (oxygen) is preferably 0.0045% or less, and more preferably 0.0040% or less. On the other hand, while this is not to restrict the lower limit of the content of O (oxygen), making the content of O (oxygen) as extremely low as less than 0.0005% requires prolonged refining, which may lead to an increase in the refining cost. From an economical viewpoint, therefore, O (oxygen) is preferably 0.0005% or more. O (oxygen) is more preferably 0.0006% or more.

### [Optionally Selected Composition of Steel Material]

While the above-described chemical composition is a preferable basic composition of the high-Mn steel, an optionally selected composition of elements that may be contained as necessary in addition to the basic composition will be shown next. They are at least one type among Mo: 0.01% to 2.00%, V: 0.01% to 2.00%, W: 0.01% to 2.00%, Ni: 0.01% to 4.00%, REM: 0.0010% to 0.0200%, and B: 0.0003% to 0.0030%. Reasons for restricting the respective components are as follows.

### [Mo, V, and W: 0.01% to 2.00%]

Mo, V, and W are all elements that contribute to stabilizing the austenite phase as well as to improving the strength of the steel material and improving the cryogenic impact toughness, and at least one type thereof can be selected and contained as necessary. To obtain these effects, it is preferable that the content of each of Mo, V, and W be 0.01% or more. On the other hand, if the content of each of Mo, V, and W is more than 2.00%, coarse carbonitride increases and forms a starting point of a fracture, which may degrade the cryogenic impact toughness. Therefore, when containing Mo, V, and W, it is preferable that the content be 2.00% or less. Each of the contents of Mo, V, and W is more preferably 1.70% or less, and even more preferably 1.50% or less.

### [Ni: 0.01% to 4.00%]

Ni is an element that contributes to stabilizing the austenite phase and strengthens the austenite grain boundaries, and is an element that contributes also to improving the cryogenic impact toughness of the steel material. To obtain these effects, the content of Ni is preferably 0.01% or more. The content of Ni is more preferably 0.10% or more, and even more preferably 0.20% or more. On the other hand, as Ni is an expensive element, containing more than 4.00% Ni is economically disadvantageous. Therefore, the content of Ni is preferably 4.00% or less. The content of Ni is more preferably 3.75% or less, and even more preferably 3.50% or less.

### [REM: 0.0010% to 0.0200%]

REM is a rare earth element such as Sc, Y, La, or Ce, and is an element having an action of improving the toughness and further the ductility and the resistance to sulfide stress corrosion cracking of the steel material through control of the form of inclusions. To obtain these effects, the content of REM is preferably 0.0010% or more. The content of REM is more preferably 0.0015% or more. On the other hand, if more than 0.0200% REM is contained, non-metallic inclusions increase, which may degrade the toughness and further the ductility and the resistance to sulfide stress cracking. Therefore, the content of REM is preferably 0.0200% or less. The content of REM is more preferably 0.0180% or less.

### [B: 0.0003% to 0.0030%]

B is an element that has an action of segregating at grain boundaries and contributing to improving the toughness of the steel material. To obtain this effect, the content of B is preferably 0.0003% or more. The content of B is more preferably 0.0008% or more. On the other hand, if more than 0.0030% B is contained, coarse nitride and carbide increase, which may degrade the toughness. Therefore, the content of B is preferably 0.0030% or less. The content of B is more preferably 0.0018% or less.

### [Composition of Balance of Steel Material]

The composition of the balance other than the above-described chemical composition includes Fe and unavoidable impurities. As the unavoidable impurities, Ca, Mg, Ti, Nb, and Cu can be named as examples, and a total of 0.05% or less unavoidable impurities is allowable. As long as the above-described basic composition and optionally selected composition are satisfied, elements other than these unavoidable impurities may be contained, and such a form of implementation is also included in the technical scope of the present invention. Further, an element of the optionally selected composition, when contained at a ratio lower than the lower limit, does not influence the properties of the high-Mn steel of the embodiment and is therefore allowable as an unavoidable impurity.

### [Production Method of High-Mn Steel]

Further, a preferable production method of the high-Mn steel to be used in the embodiment will be described. The production method is not restricted to the one to be described below, and any other production methods that can produce equivalent high-Mn steel can be adopted.

Molten steel having the above-described steel material composition is smelted by a common smelting method using a converter, an electric furnace, etc. and turned into steel material, such as slabs, of predetermined dimensions by a common casting method, such as a continuous casting method or an ingot making-blooming method. In smelting the molten steel, secondary refining using a vacuum degassing device, a ladle refining device, etc. may be performed.

The obtained steel material is further heated and subjected to hot rolling followed by cooling to turn into a steel material of predetermined dimensions. A steel material with excellent cryogenic impact toughness can be obtained by heating the steel material at a temperature within a range of 1100°C to 1300°C, ending the hot rolling at a finish-rolling end temperature of 790°C to 980°C, and immediately performing cooling etc. To adjust the steel material properties, a heat treatment, such as an annealing treatment, may be further performed.

Preferable mechanical properties of the high-Mn steel used in the embodiment will be described. It is preferable that a high-strength steel material for cryogenic use having the above-described steel material composition have a plate thickness of, for example, 5 mm to 102 mm, yield stress (0.2% proof stress) at room temperature of 400 MPa or higher, and Charpy impact absorbing energy (ᵥE₋₁₉₆) of 28 J or higher. Further, the tensile strength at room temperature is preferably 660 MPa or higher, more preferably 800 MPa or higher.

### [Basic Composition of Weld Metal]

In the embodiment, the weld joint is created by forming a weld metal part, composed of one layer or multiple layers of weld metal, between pieces of the above-described steel material of high-Mn steel by gas metal arc welding.

The basic composition of the weld metal according to the embodiment is as follows. The weld metal contains a chemical composition including C: 0.15% to 0.80%, Si: 0.10% to 1.00%, Mn: 17.0% to 30.0%, P: 0.030% or less, S: 0.030% or less, Al: 0.001% to 0.100%, Cr: 0.4% to 5.5%, Mo: 0.01% to 3.50%, Ni: 0.01% to 10.00%, and N: 0.0200% to 0.1500%, with the balance being composed of Fe, an optionally selected composition, and unavoidable impurities. Reasons for restricting the chemical composition are as follows.

### [C: 0.15% to 0.80%]

C is an element that has an action of enhancing the strength of the weld metal through solid-solution strengthening. Moreover, C stabilizes the austenite phase and improves the cryogenic impact toughness of the weld metal. Obtaining these effects requires 0.15% or more C to be contained. Therefore, the content of C should be 0.15% or more. The content of C is preferably 0.20% or more, more preferably 0.25% or more, and even more preferably 0.28% or more. On the other hand, if more than 0.80% C is contained, carbide precipitates and the cryogenic impact toughness degrades, and further hot cracking becomes more likely to occur during welding. Therefore, the content of C should be 0.80% or less. The content of C is preferably 0.75% or less, more preferably 0.70% or less, even more preferably 0.65% or less, and most preferably 0.63% or less.

### [Si: 0.10% to 1.00%]

Si acts as a deoxidizer to produce effects of increasing the yield of Mn as well as increasing the viscosity of the molten metal to stably retain the bead shape. Obtaining these effects requires 0.10% or more Si to be contained. Therefore, the content of Si should be 0.10% or more. The content of Si is preferably 0.15% or more, more preferably 0.20% or more, even more preferably 0.25% or more, and most preferably 0.28% or more. On the other hand, if more than 1.00% Si is contained, the cryogenic impact toughness of the weld metal degrades. Moreover, Si segregates during solidification and causes a liquid phase to form at a solidified cell interface, thereby degrading the hot cracking resistance. Therefore, the content of Si should be 1.00% or less. The content of Si is preferably 0.80% or less, more preferably 0.75% or less, and even more preferably 0.70% or less.

### [Mn: 17.0% to 30.0%]

Mn is an element that inexpensively stabilizes the austenite phase, and 17.0% or more Mn need be contained in the embodiment. If Mn is less than 17.0%, a ferrite phase forms in the weld metal, which significantly degrades the cryogenic impact toughness. Therefore, the content of Mn should be 17.0% or more. The content of Mn is preferably 18.0% or more, and more preferably 19.0% or more. On the other hand, if Mn exceeds 30.0%, excessive segregation of Mn occurs during solidification, which induces hot cracking. Therefore, the content of Mn should be 30.0% or less. The content of Mn is preferably 28.0% or less, and more preferably 27.0% or less.

### [P: 0.030% or less]

P is an element that segregates at crystal grain boundaries and induces hot cracking. In the embodiment, it is preferable that P be reduced as much as possible, while 0.030% or less P is allowable. Therefore, the content of P should be 0.030% or less. The content of P is preferably 0.020% or less, more preferably 0.018% or less, even more preferably 0.016% or less, and most preferably 0.014% or less. While this is not to restrict the lower limit of the content of P, extremely reducing P may lead to an increase in the refining cost. Therefore, the content of P is preferably adjusted to 0.002% or more.

### [S: 0.030% or less]

S is present in the weld metal as a sulfide-based inclusion MnS. MnS forms a starting point of formation of a fracture and thus degrades the cryogenic impact toughness. Therefore, the content of S should be 0.030% or less. The content of S is preferably 0.025% or less, more preferably 0.020% or less, and even more preferably 0.017% or less. While this is not to restrict the lower limit of the content of S, extremely reducing S may lead to an increase in the refining cost. Therefore, the content of S is preferably adjusted to 0.001% or more.

### [Al: 0.001% to 0.100%]

Al acts as a deoxidizer and has an important action of increasing the viscosity of the molten metal and stably retaining the bead shape. Moreover, Al narrows the temperature range of the solid-liquid coexisting region of the molten metal and thereby contributes to inhibiting the formation of hot cracks in the weld metal. As these effects become noticeable when 0.001% or more Al is contained, the content of Al should be 0.001% or more. The content of Al is preferably 0.005% or more, and more preferably 0.010% or more. On the other hand, if more than 0.100% Al is contained, the viscosity of the molten metal becomes so high that conversely defects, such as incomplete fusion, increase as beads fail to spread. Therefore, the content of Al should be 0.100% or less. The content of Al is preferably 0.060% or less, more preferably 0.050% or less, and even more preferably 0.040% or less.

### [Cr: 0.4% to 5.5%]

Cr works as an element that stabilizes the austenite phase at cryogenic temperatures, and has an effect of improving the cryogenic fracture toughness of the weld metal. Moreover, Cr has an effect of improving the strength of the weld metal, an effect of raising the liquidus-line temperature of the molten metal to prevent hot cracking of the weld metal during implementation of welding, and an effect of improving the corrosion resistance of the weld metal. If the content of Cr is too low, these effects cannot be obtained. Exhibiting these effects requires 0.4% or more Cr to be contained. The content of Cr is preferably 0.6% or more, and more preferably 0.8% or more. On the other hand, if the content of Cr is too high, Cr carbide precipitates in the weld metal, which degrades the cryogenic fracture toughness of the weld metal. Therefore, the content of Cr need be 5.5% or less. The content of Cr is preferably 5.0% or less, and more preferably 4.5% or less.

### [Mo: 0.01% to 3.50%]

Mo is an element that strengthens the austenite grain boundaries, and segregates at the grain boundaries to improve the strength of the weld metal. Moreover, Mo has an action of improving the strength of the weld metal through solid-solution strengthening. Exhibiting these effects requires setting the content of Mo to 0.01% or more. The content of Mo is preferably 0.30% or more, more preferably 0.50% or more, and even more preferably 1.00% or more. On the other hand, if more than 3.50% Mo is contained, Mo precipitates as carbide and forms a starting point of formation of a fracture, thereby degrading the cryogenic impact toughness. Therefore, the content of Mo should be 3.50% or less. The content of Mo is preferably 3.20% or less, more preferably 3.00% or less, and even more preferably 2.50% or less.

### [Ni: 0.01% to 10.00%]

Ni is an element that strengthens the austenite grain boundaries, and segregates at the grain boundaries to improve the cryogenic impact toughness. Moreover, Ni has an effect of stabilizing the austenite phase. Thus, further increasing the content stabilizes the austenite phase and improves the cryogenic impact toughness of the weld metal. Exhibiting this effect requires the content of Ni to be 0.01% or more. The content of Ni is preferably 0.02% or more, more preferably 0.05% or more, and even more preferably 1.00% or more. On the other hand, as Ni is an expensive element, containing more than 10.00% Ni is economically disadvantageous. Therefore, the content of Ni should be 10.00% or less. The content of Ni is preferably 8.00% or less, more preferably 7.00% or less, even more preferably 6.50% or less, and most preferably 6.00% or less.

### [N: 0.0200% to 0.1500%]

While N is an element that unavoidably gets mixed in, N is intentionally mixed in in the embodiment. Like C, N effectively contributes to improving the strength of the weld metal, as well as contributes to stably improving the cryogenic impact toughness by stabilizing the austenite phase. Further, N is an additive element that has an effect of narrowing the solid-liquid coexisting temperature range when contained in an increased amount, and thus inhibits formation of hot cracks in the high-Mn steel. These effects become noticeable when 0.0200% or more N is contained. Therefore, the content of N should be 0.0200% or more. The content of N is preferably 0.0500% or more, more preferably 0.0800% or more, and even more preferably 0.1000% or more. On the other hand, if more than 0.1500% N is contained, nitride forms and the low-temperature toughness degrades, and the amount of solid-solution N becomes so large as to cause weld defects, such as blowholes and pits. Therefore, the content of N should be 0.1500% or less. The content of N is preferably 0.1400% or less, and more preferably 0.1300% or less.

As will be described later, available methods for adding N into the weld metal include a method of adding N by mixing nitrogen gas in the shielding gas for gas metal arc welding and a method of adding N by increasing the content of N in the solid wire that is the welding material.

### [Optionally Selected Composition of Weld Metal]

While the above-described composition is a basic chemical composition of the weld metal of the embodiment, in addition to the chemical composition, at least one type selected from the following can be further selected and contained as necessary as an optionally selected composition: V: 0.01% to 1.00%, Ti: 0.010% to 1.000%, Nb: 0.010% to 1.000%, W: 0.01% to 1.00%, Cu: 0.01% to 1.00%, and B: 0.0015% or less. Reasons for restricting the respective components are as follows.

### [V: 0.01% to 1.00%]

V is a carbide forming element, and contributes to improving the strength of the weld metal by causing fine carbide to precipitate. To obtain this effect, when V is contained, the content is preferably 0.01% or more. The content of V is more preferably 0.02% or more. On the other hand, if more than 1.00% V is contained, carbide coarsens and forms a starting point of formation of a fracture, which may degrade the cryogenic impact toughness. Therefore, when V is contained, the content is preferably 1.00% or less. The content of V is more preferably 0.80% or less, and even more preferably 0.60% or less.

### [Ti: 0.010% to 1.000%]

Ti is a carbide forming element, and contributes to improving the strength of the weld metal by causing fine carbide to precipitate. Moreover, Ti contributes to inhibiting formation of hot cracks by causing carbide to precipitate at a solidified cell interface of the weld metal. To obtain these effects, 0.010% or more Ti is preferably contained. The content of Ti is more preferably 0.015% or more. On the other hand, if more than 1.000% Ti is contained, carbide coarsens and forms a starting point of formation of a fracture, thereby degrading the cryogenic impact toughness. Therefore, the content of Ti is preferably 1.000% or less. The content of Ti is more preferably 0.800% or less, and even more preferably 0.600% or less.

### [Nb: 0.010% to 1.000%]

Nb is a carbide forming element, and contributes to improving the strength of the weld metal by causing carbide to precipitate. Moreover, Nb contributes to inhibiting formation of hot cracks by causing carbide to precipitate at a solidified cell interface of the weld metal. To obtain these effects, 0.010% or more Nb is preferably contained. The content of Nb is more preferably 0.015% or more. On the other hand, if the content of Nb exceeds 1.000%, carbide coarsens and forms a starting point of formation of a fracture, thereby degrading the cryogenic impact toughness. Therefore, the content of Nb is preferably 1.000% or less. The content of Nb is more preferably 0.800% or less, even more preferably 0.700% or less, and most preferably 0.600% or less.

### [W: 0.01% to 1.00%]

W is a carbide forming element, and is an element that contributes to improving the strength of the weld metal by causing carbide to precipitate. Moreover, W contributes to stabilizing the austenite phase and improves the cryogenic impact toughness. In addition, W contributes to inhibiting formation of hot cracks by causing carbide to precipitate at a solidified cell interface of the weld metal. To obtain these effects, 0.01% or more W is preferably contained. The content of W is more preferably 0.02% or more, and even more preferably 0.05% or more. On the other hand, if the content of W exceeds 1.00%, carbide coarsens and forms a starting point of formation of a fracture, thereby degrading the cryogenic impact toughness. Therefore, the content of W is preferably 1.00% or less. The content of W is more preferably 0.80% or less, and even more preferably 0.60% or less.

### [Cu: 0.01% to 1.00%]

Cu is an element that stabilizes the austenite phase, and even at cryogenic temperatures, stabilizes the austenite phase and improves the cryogenic impact toughness of the weld metal. To obtain this effect, the content of Cu is preferably 0.01% or more. The content of Cu is more preferably 0.04% or more. On the other hand, if Cu is contained in a large amount exceeding 1.00%, Cu segregates during solidification and induces hot cracking during welding. Therefore, the content of Cu is preferably 1.00% or less. The content of Cu is more preferably 0.80% or less.

### [B: 0.0015% or less]

B is an element that has an action of segregating at grain boundaries and contributing to improving the toughness of the weld metal. However, if more than 0.0015% B is contained, coarse nitride and carbide increase, which degrades the toughness. Therefore, the content of B is preferably 0.0015% or less. The lower limit of the content of B may be 0. The content of B is more preferably 0.0010% or less, and even more preferably 0.0007% or less.

### [Composition of Balance of Weld Metal]

The balance other than the above-described chemical composition is composed of Fe and unavoidable impurities. As the unavoidable impurities, H, O, Mg, Ca, Zn, Re, REM, etc. can be named as examples, and a total of 0.0100% or less unavoidable impurities is allowable. As long as the above-described basic composition and optionally selected composition are satisfied, elements other than these unavoidable impurities may be contained, and such a form of implementation is also included in the technical scope of the present invention. Further, each element of the optionally selected composition, when contained at a ratio lower than the lower limit, does not influence the properties of the weld metal and is therefore allowable as an unavoidable impurity.

The chemical composition of the weld metal is mainly determined by the ratio of inflow of the base metal and the welding material, such as a gas metal arc welding wire.

### <Production Method of Gas Metal Arc Weld joint>

Next, a production method of the gas metal arc weld joint according to the above-described embodiment will be described below.

### [Welding Method, Welding Conditions]

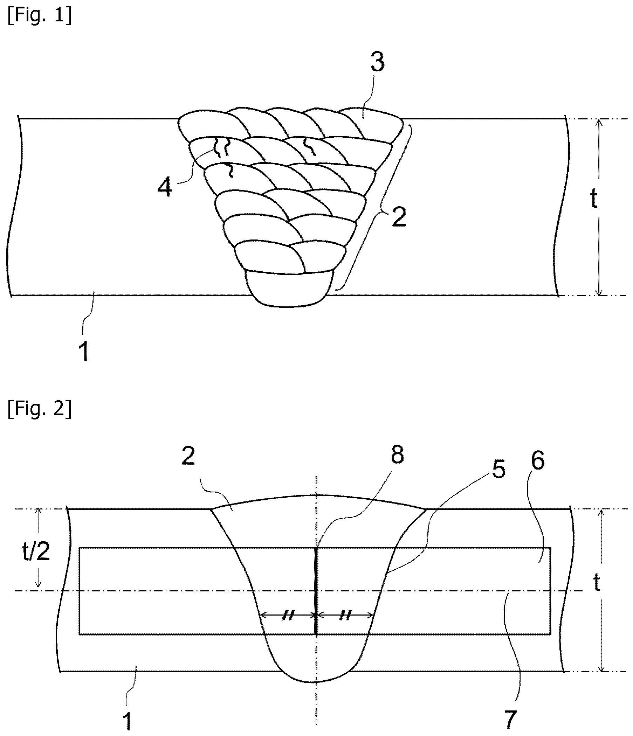

Welding conditions etc. relating to a gas metal arc welding method that is suitably used as the production method of the gas metal arc weld joint according to the embodiment will be described by presenting specific examples. One example of a cross-section of a weld metal part of the weld joint after welding is shown in Fig. 1. A plate thickness t of a steel material constituting a base metal 1 is within a range of 5 mm to 102 mm.

When producing a test specimen to be described later, pieces of this base metal 1 are placed end-to-end so as to form a V-groove with a groove angle θ of 35° to 60° in accordance with JIS Z 3111: 2005. As an electrode for gas metal arc welding, a solid wire with a diameter of 1.0 mm to 1.6 mm can be used. Preheating need not be performed.

Other welding conditions are as follows: current: 180 A to 300 A (DCEP), voltage: 20 V to 30 V, welding speed: 10 cm/min to 25 cm/min, and welding heat input: 16.0 kJ/cm to 50.0 kJ/cm. Here, if the current is lower than 180 A, the wire cannot be sufficiently melted and the arc becomes unstable, whereas if it exceeds 300 A, droplet transfer becomes unstable and a large amount of spatter is generated. If the welding heat input is smaller than 16.0 kJ/cm, the heat input is so small that the base metal and the weld metal fail to fuse appropriately, resulting in humping beads, whereas if it exceeds 50.0 kJ/cm, the shape of beads becomes irregular. The welding heat input is preferably 18.0 kJ/cm to 28.0 kJ/cm. The welding heat input is more preferably 20.0 kJ/cm to 22.0 kJ/cm. The inter-pass temperature is preferably 150°C or lower.

As the welding position, downward, horizontal, overhead, vertically upward, etc. can be named as examples. The shape of the groove may be, other than the single V groove shown in Fig. 1, a single bevel groove, a double bevel groove, a double V groove, etc. The groove angle θ is preferably 35° to 60° as described above, more preferably 40° to 55°.

Under the above-described welding conditions, a weld metal 2 is formed inside the V-groove by single-layer or multi-layer welding, and the weld metal 2 has a form in which weld metal layers 3 overlap one another in multiple layers. When departure is made from the welding method (welding conditions) of the embodiment, weld defects, such as hot cracks 4, occur in some of the weld metal layers 3. The welding method of the embodiment is unlikely to cause weld defects such as the hot cracks 4.

### [Shielding Gas]

In this embodiment, as the shielding gas for gas metal arc welding, [A] a shielding gas containing, in vol%, 1.0% or more but less than 30.0% nitrogen (N₂) gas, with the balance being composed of carbon dioxide gas and unavoidable impurities is used. Or [B] a shielding gas containing, in vol%, 1.0% or more but less than 30.0% nitrogen gas and 56.0% or more but less than 79.2% Ar gas, with the balance being composed of carbon dioxide gas and unavoidable impurities is used. Either [A] or [B] can be selected and used. Hereinafter, unless otherwise noted, "%" for the content of a gas ingredient means "vol%."

Nitrogen (N) in this shielding gas is an element that, when dissolved in the weld metal of high-Mn steel as a solid solution, improves the strength of the weld metal and the weld joint through solid-solution strengthening. Further, increasing the content of N in the weld metal tends to narrow the solid-liquid coexisting temperature range, thereby improving the susceptibility to hot cracking. Obtaining these effects requires 1.0% or more nitrogen to be contained in the shielding gas. Therefore, the content of nitrogen in the shielding gas should be 1.0% or more. The content of nitrogen is preferably 5.0% or more, and more preferably 10.0% or more. On the other hand, if 30.0% or more nitrogen is contained in the shielding gas, the arc becomes unstable and a large number of weld defects, such as blowholes and pits, occur, leading to degradation of the joint properties. Therefore, the content of nitrogen in the shielding gas should be less than 30.0%. The content of nitrogen is preferably 25.0% or less, and more preferably 20.0% or less.

Next, the carbon dioxide (CO₂) gas constituting the balance of the shielding gas will be described. The carbon dioxide gas is a gas that is most used as a shielding gas, and is characterized by being inexpensive compared with Ar gas etc. and allowing deep penetration.

The above-described shielding gas [A] uses such carbon dioxide gas as the rest of the gas. The content of the carbon dioxide gas in this case corresponds to the balance excluding the content of the nitrogen gas (1.0% or more but less than 30.0%), so that the content of the carbon dioxide gas is more than 70.0% but 99.0% or less.

On the other hand, instead of using carbon dioxide gas alone, carbon dioxide gas mixed with Ar gas, which is an inert gas, may be used as with the shielding gas [B]. When using this mixed gas [B], it is preferable that a generally easily available gas composed of Ar gas and carbon dioxide gas mixed at 4:1 be used. Thus, the content of a part of the mixed gas [B] other than the nitrogen gas is also more than 70.0% but 99.0% or less, so that the respective contents of the Ar gas and the carbon dioxide gas are 56.0% or more but less than 79.2% for the Ar gas and more than 14.0% but 19.8% or less for the carbon dioxide gas.

The unavoidable impurities refer to other gases than the nitrogen gas, the carbon dioxide gas, and the Ar gas, and an oxygen (O₂) gas, a hydrogen (H₂) gas, can be named as examples.

The gas flow rate of the shielding gas is preferably 10 L/min to 30 L/min. The gas flow rate is more preferably 15 L/min to 25 L/min.

When using the shielding gas containing, in vol%, 1.0% or more but less than 30.0% nitrogen gas as described above, the content of N in the weld metal becomes 0.0200% to 0.1500%, and N dissolves in the weld metal as a solid solution, which can improve the strength of the weld metal and the weld joint.

### [Basic Composition of Solid Wire]

The weld joint according to the embodiment is a weld joint created by forming a weld metal part, composed of one layer or multiple layers of weld metal, between pieces of the above-described steel material of high-Mn steel by a gas metal arc welding method. Preferable chemical composition of the solid wire to be used in this case will be described below. Hereinafter, "%" for "chemical composition" of the solid wire means "mass%."

A preferable basic composition for the solid wire to be used in the embodiment include N: 0.4000% or less. The preferable basic composition further includes the following: C: 0.20% to 0.80%, Si: 0.15% to 1.00%, Mn: 17.0% to 28.0%, P: 0.030% or less, S: 0.030% or less, Ni: 0.01% to 10.00%, Cr: 0.4% to 4.0%, and Mo: 0.01% to 3.50%. The composition further includes B: less than 0.0015%, with the balance being composed of Fe and unavoidable impurities. Reasons for restricting the respective chemical components are as follows.

### [N: 0.4000% or less]

When a conventional shielding gas that is either carbon dioxide gas or a mixed gas of carbon dioxide gas and argon gas is used, the content of N in the weld metal does not increase; therefore, to increase the content of N in the weld metal, it is preferable that a wire increased in the content of N be used. In this case, the content of N in the wire is preferably within a range of more than 0.1200% to 0.4000% or less. If the content of N in the wire is 0.1200% or less, the content of N in the weld metal may fail to be sufficiently increased. The content of N in the wire is preferably 0.2000% or more. If the content of N in the wire exceeds 0.4000%, the amount added into the weld metal becomes so large that the intragranular strength becomes excessively high compared with the grain boundary strength, which may result in a fracture from a grain boundary and degradation of the cryogenic impact toughness. Therefore, when using the conventional shielding gas that is either carbon dioxide gas or a mixed gas of carbon dioxide gas and argon gas as the shielding gas, the content of N is preferably 0.4000% or less. The content of N is more preferably 0.3800% or less, and even more preferably 0.3600% or less.

However, in the case of the method that uses the above-described gas containing, in vol%, 1.0% or more but less than 30.0% nitrogen gas as the shielding gas and adds N from the nitrogen gas into the weld metal, if the content of N in the wire is high, the content of N in the weld metal becomes too high, which may degrade the cryogenic impact toughness. For this reason, it is preferable that the content of N in the wire be reduced to 0.1200% or less. The content of N is more preferably 0.1100% or less, and even more preferably 0.1000% or less.

N in the wire is an element that effectively contributes to improving the intragranular strength of the weld metal as well as contributes to stably improving the cryogenic impact toughness by stabilizing the austenite phase. To obtain these effects, the content of N is preferably 0.0030% or more. The content of N is more preferably 0.0040% or more, and even more preferably 0.0060% or more.

### [C: 0.20% to 0.80%]

C is an element that has an action of enhancing the strength of the weld metal through solid-solution strengthening, and moreover, C is an inexpensive and important element that has an action of stabilizing the austenite phase to improve the cryogenic impact toughness of the weld metal. To obtain these effects, the content of C is preferably 0.20% or more. The content of C is more preferably 0.25% or more, and even more preferably 0.28% or more. On the other hand, if more than 0.80% C is contained, carbide forms excessively in the weld metal, which may degrade the cryogenic impact toughness and further increase the likelihood of hot cracking during welding. Therefore, the content of C is preferably 0.80% or less. The content of C is more preferably 0.75% or less, even more preferably 0.70% or less, and most preferably 0.63% or less.

### [Si: 0.15% to 1.00%]

Si acts as a deoxidizer to produce effects of increasing the yield of Mn and increasing the viscosity of the molten metal to stably retain the bead shape. To obtain these effects, the content of Si is preferably 0.15% or more. The content of Si is more preferably 0.18% or more, even more preferably 0.20% or more, and most preferably 0.25% or more. On the other hand, if more than 1.00% Si is contained, the Si degrades the cryogenic impact toughness of the weld metal, and segregates during solidification and causes a liquid phase to form at a solidified cell interface, which may degrade the hot cracking resistance. Therefore, the content of Si is preferably 0.90% or less. The content of Si is more preferably 0.80% or less, even more preferably 0.75% or less, and most preferably 0.70% or less.

### [Mn: 17.0% to 28.0%]

Mn is an element that has an action of inexpensively stabilizing the austenite phase. However, if the content of Mn is less than 17.0%, a ferrite phase forms in the weld metal, which may significantly degrade the cryogenic impact toughness. Therefore, the content of Mn is preferably 17.0% or more. The content of Mn is more preferably 18.0% or more, and even more preferably 18.5% or more. On the other hand, if the content of Mn exceeds 28.0%, the stacking fault energy increases and the resistance during deformation decreases, which may degrade the strength. Therefore, the content of Mn is preferably 28.0% or less. The content of Mn is more preferably 27.0% or less, and even more preferably 26.0% or less.

### [P: 0.030% or less]

P is an element that segregates at crystal grain boundaries and induces hot cracking. In the embodiment, it is preferable that P be reduced as much as possible, while 0.030% or less P is allowable. Therefore, the content of P is preferably 0.030% or less. The content of P is more preferably 0.020% or less, even more preferably 0.018% or less, and most preferably 0.014% or less. On the other hand, while this is not to restrict the lower limit of the content of P, making the content of P as extremely low as less than 0.002% requires prolonged refining and leads to an increase in the refining cost. From an economical viewpoint, therefore, the content of P is preferably 0.002% or more.

### [S: 0.030% or less]

S is present in the weld metal as a sulfide-based inclusion MnS. MnS forms a starting point of formation of a fracture and may thereby degrade the cryogenic impact toughness. Therefore, the content of S is preferably 0.030% or less. The content of S is more preferably 0.025% or less, even more preferably 0.020% or less, and most preferably 0.017% or less. On the other hand, while this is not to restrict the lower limit of the content of S, excessively reducing S leads to an increase in the refining cost. Therefore, the content of S is preferably 0.001% or more.

### [Ni: 0.01% to 10.00%]

Ni is an element that strengthens the austenite grain boundaries, and segregates at the grain boundaries to improve the cryogenic impact toughness. Moreover, Ni has an effect of stabilizing the austenite phase, and therefore further increasing the content stabilizes the austenite phase and improves the cryogenic impact toughness of the weld metal. To obtain these effects, the content of Ni is preferably 0.01% or more. The content of Ni is more preferably 1.00% or more. On the other hand, as Ni is an expensive element, containing more than 10.00% Ni is economically disadvantageous. Therefore, the content of Ni is preferably 10.00% or less. The content of Ni is more preferably 8.00% or less, even more preferably 7.00% or less, and most preferably 6.00% or less.

### [Cr: 0.4% to 4.0%]

Cr is an element that stabilizes the austenite phase at cryogenic temperatures, and effectively contributes to improving the cryogenic impact toughness and improving the weld metal strength. Moreover, Cr effectively acts to narrow the temperature range of the solid-liquid coexisting region of the molten metal and inhibit the formation of hot cracks. To obtain these effects, the content of Cr is preferably 0.4% or more. The content of Cr is more preferably 0.8% or more, even more preferably 1.0% or more, and most preferably 1.2% or more. On the other hand, if more than 4.0% Cr is contained, Cr carbide forms, which may degrade the cryogenic impact toughness. Therefore, the content of Cr is preferably 4.0% or less. The content of Cr is more preferably 3.5% or less, even more preferably 3.2% or less, and most preferably 2.8% or less.

### [Mo: 0.01% to 3.50%]

Mo is an element that strengthens the austenite grain boundaries, and segregates at the grain boundaries to improve the strength of the weld metal. Moreover, Mo has an action of improving the strength of the weld metal through solid-solution strengthening. To obtain these effects, the content of Mo is preferably 0.01% or more. The content of Mo is more preferably 0.50% or more, even more preferably 1.00% or more, and most preferably 1.50% or more. On the other hand, if more than 3.50% Mo is contained, the enhancing effect on the weld metal strength becomes restricted, and moreover Mo precipitates as carbide to form a starting point of formation of a fracture, which may degrade the cryogenic impact toughness. Therefore, the content of Mo is preferably 3.50% or less. The content of Mo is more preferably 3.30% or less, even more preferably 3.10% or less, and most preferably 3.00% or less.

### [B: less than 0.0015%]

B is one of elements that segregate at the austenite grain boundaries. When 0.0015% or more B is mixed in, B forms boron nitride at the austenite grain boundaries and degrades the strength. Moreover, the boron nitride forms a starting point of a fracture and may degrade the cryogenic impact toughness. Therefore, the content of B is preferably less than 0.0015%. The content of B is more preferably 0.0010% or less, and even more preferably 0.0005% or less.

### [Optionally Selected Composition of Solid Wire]

While the above-described chemical composition is a preferable basic composition for the wire to be used in the embodiment, in addition to these basic composition, the following optionally selected composition may be contained as necessary. These are at least one type selected from: V: 0.01% to 0.04%, Ti: 0.01% to 0.04%, Nb: 0.01% to 0.04%, Cu: 0.01% to 1.00%, and Al: 0.002% to 0.100%. Reasons for restricting the respective components are as follows.

### [V: 0.01% to 0.04%]

V is a carbide forming element, and contributes to improving the strength of the weld metal by causing fine carbide to precipitate. To obtain this effect, the content of V is preferably 0.01% or more. On the other hand, if more than 0.04% V is contained, carbide coarsens to form a starting point of formation of a crack during drawing of the wire, which may degrade the wire drawability and thus the manufacturability of the wire. Therefore, the content of V is preferably 0.04% or less.

### [Ti: 0.01% to 0.04%]

Ti is a carbide forming element, and contributes to improving the strength of the weld metal by causing fine carbide to precipitate. Moreover, Ti contributes to inhibiting the formation of hot cracks by causing carbide to precipitate at a solidified cell interface of the weld metal. To obtain these effects, the content of Ti is preferably 0.01% or more. The content of Ti is more preferably 0.02% or more. On the other hand, if the content of Ti exceeds 0.04%, carbide coarsens to form a starting point of formation of a crack during drawing of the solid wire, which may degrade the wire drawability and the manufacturability of the wire. Therefore, the content of Ti is preferably 0.04% or less. The content of Ti is more preferably 0.03% or less.

### [Nb: 0.01% to 0.04%]

Nb is a carbide forming element, and contributes to improving the strength of the weld metal by causing carbide to precipitate. Moreover, Nb contributes to inhibiting the formation of hot cracks by causing carbide to precipitate at a solidified cell interface of the weld metal. To obtain these effects, the content of Nb is preferably 0.01% or more. The content of Nb is more preferably 0.02% or more. On the other hand, if the content of Nb exceeds 0.04%, carbide coarsens to form a starting point of formation of a crack during wire drawing of the solid wire, which may degrade the wire drawability and thus the manufacturability of the wire. Therefore, the content of Nb is preferably 0.04% or less. The content of Nb is more preferably 0.03% or less.

### [Cu: 0.01% to 1.00%]

Cu is an element that stabilizes the austenite phase, and even at cryogenic temperatures, stabilizes the austenite phase and improves the cryogenic impact toughness of the weld metal. To obtain this effect, the content of Cu is preferably 0.01% or more. The content of Cu is more preferably 0.10% or more, and even more preferably 0.20% or more. On the other hand, if the content of Cu exceeds 1.00%, the hot ductility may degrade and thus the manufacturability of the wire may degrade. Therefore, the content of Cu is preferably 1.00% or less. The content of Cu is more preferably 0.70% or less, and even more preferably 0.50% or less.

### [Al: 0.002% to 0.100%]

Al acts as a deoxidizer, and has an important action of increasing the viscosity of the molten metal to stably retain the bead shape and reduce the generation of spatter. Moreover, Al contributes to inhibiting the formation of hot cracks in the weld metal by raising the liquidus-line temperature of the molten metal. To obtain these effects, the content of Al is preferably 0.002% or more. The content of Al is more preferably 0.010% or more, and even more preferably 0.020% or more. On the other hand, if more than 0.100% Al is contained, the viscosity of the molten metal becomes so high that conversely spatter may increase and defects, such as incomplete penetration, may increase as beads fail to spread. Therefore, the content of Al is preferably 0.100% or less. The content of Al is more preferably 0.060% or less, and even more preferably 0.050% or less.

### [Composition of Balance of Solid Wire]

The composition of the balance other than the above-described chemical composition is Fe and unavoidable impurities. As the unavoidable impurities, H, O, Mg, Zn, Re, etc. can be named as examples, and a total of 0.010% or less unavoidable impurities is allowable. As long as the above-described basic composition and optionally selected composition are satisfied, elements other than these unavoidable impurities may be contained, and such a form of implementation is also included in the technical scope of the present invention. Further, an element of the optionally selected composition, when contained at a ratio lower than the lower limit, does not influence the properties of the solid wire of the embodiment and is therefore allowable as an unavoidable impurity.

### Examples

In the following, the present invention will be further described based on examples. The following examples are merely for describing the present invention more specifically by presenting examples, and are not intended to restrict the scope of the right of the present invention.

First, as test materials, high-Mn steel materials for cryogenic use (plate thickness: 20 mm) having the compositions shown in Table 1 were prepared. Molten steels having the compositions shown in Table 2 were smelted by a vacuum melting furnace and cast to obtain steel ingots each weighing 100 kg. Each of the obtained steel ingots was heated to 1200°C and thereafter subjected to hot rolling followed by cold rolling, i.e., wire drawing to obtain a solid wire for gas metal arc welding having a diameter of 1.2 mm.

Pieces of each of the steel materials of Table 1 were placed end-to-end so as to form a 50° single V groove (see Fig. 1) in accordance with JIS Z 3111: 2005. Then, using one of the solid wires of Table 2 as the welding material, consumable-electrode gas metal arc welding was performed under the welding conditions of a current of 200 A to 250 A, a voltage of 24 V to 26 V, a welding speed of 14 cm/min, and a gas flow rate of 20 L/min to obtain a weld joint having deposit metal inside the V-shaped groove. These welding conditions are shown in Table 3.

**[Table 1]**

| Steel Material No. | Chemical Composition of Steel Material (mass%) | | | | | | | | | | | | | | |
|---|---|---|---|---|---|---|---|---|---|---|---|---|---|---|---|
| | C | Si | Mn | P | S | Al | Cr | N | O | Mo | V | W | Ni | REM | B |
| a | 0.46 | 0.27 | 20.6 | 0.015 | 0.006 | 0.014 | 3.54 | 0.0111 | 0.0011 | - | - | - | 0.29 | - | 0.0017 |
| b | 0.55 | 0.50 | 27.5 | 0.019 | 0.006 | 0.021 | 5.14 | 0.0399 | 0.0023 | - | 0.04 | - | 0.57 | - | 0.0027 |
| c | 0.36 | 0.48 | 24.1 | 0.016 | 0.007 | 0.043 | 4.57 | 0.0122 | 0.0029 | 0.17 | - | 0.02 | - | 0.0100 | 0.0003 |
| d | 0.56 | 0.41 | 22.7 | 0.013 | 0.009 | 0.022 | 2.10 | 0.0045 | 0.0031 | - | - | - | - | - | - |
| e | 0.55 | 0.98 | 26.4 | 0.016 | 0.006 | 0.022 | 4.50 | 0.0190 | 0.0031 | 2.00 | - | - | 3.50 | - | 0.0018 |

| | | | | | | | | | | | | | | | |
|---|---|---|---|---|---|---|---|---|---|---|---|---|---|---|---|
| Note: The underlined values are outside the ranges of restriction of the steel material composition. "-" means not added. | | | | | | | | | | | | | | | |

**[Table 2]**

| Wire No. | Chemical Composition of Solid Wire (mass%) | | | | | | | | | | | | | | |
|---|---|---|---|---|---|---|---|---|---|---|---|---|---|---|---|
| | C | Si | Mn | P | S | Ni | Cr | Mo | B | N | V | Ti | Nb | Cu | Al |
| A | 0.55 | 0.34 | 26.1 | 0.012 | 0.008 | 4.12 | 0.9 | 1.21 | 0.0008 | 0.0200 | - | - | - | - | - |
| B | 0.32 | 0.57 | 21.3 | 0.020 | 0.019 | 0.37 | 3.2 | 2.68 | 0.0008 | 0.0999 | 0.02 | 0.02 | - | - | - |
| C | 0.62 | 0.32 | 22.6 | 0.020 | 0.007 | 1.52 | 2.7 | 1.94 | 0.0007 | 0.0874 | - | - | - | - | 0.010 |
| D | 0.59 | 0.50 | 18.0 | 0.021 | 0.019 | 1.80 | 2.1 | 1.30 | 0.0005 | 0.0710 | - | 0.01 | 0.02 | 0.21 | - |
| E | 0.34 | 0.30 | 29.9 | 0.024 | 0.013 | 0.23 | 4.0 | 0.00 | 0.0009 | 0.0131 | - | - | - | - | - |
| F | 0.42 | 0.38 | 25.5 | 0.020 | 0.018 | 1.25 | 3.8 | 1.42 | 0.0008 | 0.3290 | 0.01 | - | 0.03 | - | 0.030 |

| | | | | | | | | | | | | | | | |
|---|---|---|---|---|---|---|---|---|---|---|---|---|---|---|---|
| Note: The underlined values are outside the preferable ranges of the wire composition. "-" means not added. | | | | | | | | | | | | | | | |

**[Table 3]**

| Weld Joint No. | Steel Material No. | Wire No. | Shielding Gas for Welding (vol%) | | | Current | Voltage | Speed | Heat Input |
|---|---|---|---|---|---|---|---|---|---|
| | | | Ar | CO₂ | N₂ | A | V | cm/min | kJ/cm |
| 1 | a | A | 0 | 100 | 0 | 200 | 24 | 14 | 20.6 |
| 2 | a | A | 0 | 90 | 10 | 200 | 24 | 14 | 20.6 |
| 3 | a | A | 0 | 80 | 20 | 200 | 24 | 14 | 20.6 |
| 4 | a | A | 0 | 70 | 30 | 200 | 24 | 14 | 20.6 |
| 5 | a | A | 0 | 60 | 40 | 200 | 24 | 14 | 20.6 |
| 6 | b | A | 80 | 20 | 0 | 200 | 24 | 14 | 20.6 |
| 7 | b | A | 72 | 18 | 10 | 200 | 24 | 14 | 20.6 |
| 8 | b | A | 64 | 16 | 20 | 200 | 24 | 14 | 20.6 |
| 9 | b | A | 56 | 14 | 30 | 200 | 24 | 14 | 20.6 |
| 10 | b | A | 48 | 12 | 40 | 200 | 24 | 14 | 20.6 |
| 11 | a | B | 80 | 20 | 0 | 200 | 24 | 14 | 20.6 |
| 12 | a | B | 72 | 18 | 10 | 200 | 24 | 14 | 20.6 |
| 13 | b | C | 0 | 100 | 0 | 250 | 26 | 14 | 27.9 |
| 14 | b | C | 0 | 80 | 20 | 250 | 26 | 14 | 27.9 |
| 15 | c | D | 0 | 100 | 0 | 250 | 26 | 14 | 27.9 |
| 16 | c | D | 0 | 90 | 10 | 250 | 26 | 14 | 27.9 |
| 17 | c | D | 0 | 20 | 30 | 250 | 26 | 14 | 27.9 |
| 18 | d | E | 0 | 100 | 0 | 200 | 24 | 14 | 20.6 |
| 19 | d | E | 0 | 95 | 5 | 200 | 24 | 14 | 20.6 |
| 20 | e | C | 0 | 100 | 0 | 250 | 26 | 14 | 27.9 |
| 21 | e | C | 0 | 90 | 10 | 250 | 26 | 14 | 27.9 |
| 22 | e | C | 0 | 80 | 20 | 250 | 26 | 14 | 27.9 |
| 23 | e | D | 80 | 20 | 0 | 200 | 24 | 14 | 20.6 |
| 24 | e | F | 80 | 20 | 0 | 200 | 24 | 14 | 20.6 |
| 25 | e | F | 64 | 16 | 20 | 200 | 24 | 14 | 20.6 |
| 26 | e | F | 48 | 12 | 40 | 200 | 24 | 14 | 20.6 |

### [Analysis of Composition of Weld Metal]

At the weld metal part of each weld joint, a 5 mm block was sampled from a portion at the center in the plate thickness and at the center of the welding line, and the contents of the respective components in the weld metal were measured by an inert gas fusion-heat conductance method. For the content of N, a total amount of N in the weld metal was measured. The result is shown in Table 4.

**[Table 4]**

| Weld Joint No. | Steel Material No. | Wire No. | Chemical Composition of Weld Metal (mass%) | | | | | | | | | | | | | | | | Remarks |
|---|---|---|---|---|---|---|---|---|---|---|---|---|---|---|---|---|---|---|---|
| | | | C | Si | Mn | P | s | Al | Cr | Mo | Ni | N | v | Ti | Nb | w | Cu | a | |
| 1 | a | A | 0.46 | 0.27 | 23.5 | 0.013 | 0.008 | 0.003 | 1.4 | 1.00 | 3.47 | 0.0135 | - | - | - | - | - | 0.0010 | Comparative Example |
| 2 | a | A | 0.47 | 0.26 | 23.2 | 0.012 | 0.008 | 0.002 | 1.3 | 0.98 | 3.43 | 0.0890 | - | - | - | - | - | 0.0010 | Invention Example |
| 3 | a | A | 0.44 | 0.28 | 23.7 | 0.013 | 0.008 | 0.003 | 1.4 | 1.02 | 3.35 | 0.1370 | - | - | - | - | - | 0.0010 | Invention Example |
| 4 | a | A | 0.44 | 0.27 | 24.0 | 0.013 | 0.008 | 0.002 | 1.4 | 1.00 | 3.51 | 0.1593 | - | - | - | - | - | 0.0010 | Comparative Example |
| 5 | a | A | 0.46 | 0.27 | 23.6 | 0.013 | 0.008 | 0.003 | 1.3 | 0.99 | 3.43 | 0.1802 | - | - | - | - | - | 0.0009 | Comparative Example |
| 6 | b | A | 0.48 | 0.27 | 25.3 | 0.013 | 0.008 | 0.004 | 1.7 | 0.97 | 3.45 | 0.0122 | 0.01 | - | - | - | - | 0.0011 | Comparative Example |
| 7 | b | A | 0.47 | 0.30 | 25.3 | 0.013 | 0.008 | 0.004 | 1.7 | 0.98 | 3.52 | 0.0815 | 0.01 | - | - | - | - | 0.0011 | Invention Example |
| 8 | b | A | 0.46 | 0.30 | 25.1 | 0.013 | 0.008 | 0.004 | 1.7 | 0.97 | 3.59 | 0.1461 | 0.01 | - | - | - | - | 0.0011 | Invention Example |
| 9 | b | A | 0.48 | 0.27 | 25.0 | 0.013 | 0.008 | 0.004 | 1.7 | 0.97 | 3.45 | 0.1678 | 0.01 | - | - | - | - | 0.0012 | Comparative Example |
| 10 | b | A | 0.48 | 0.29 | 24.9 | 0.013 | 0.008 | 0.004 | 1.5 | 0.99 | 3.55 | 0.1832 | 0.01 | - | - | - | - | 0.0011 | Comparative Example |
| 11 | a | B | 0.34 | 0.52 | 21.1 | 0.019 | 0.017 | 0.002 | 3.2 | 2.20 | 0.36 | 0.0196 | 0.02 | 0.016 | - | - | - | 0.0010 | Comparative Example |
| 12 | a | B | 0.37 | 0.54 | 21.6 | 0.020 | 0.017 | 0.002 | 3.2 | 2.33 | 0.35 | 0.1090 | 0.02 | 0.017 | - | - | - | 0.0010 | Invention Example |
| 13 | b | C | 0.61 | 0.35 | 23.6 | 0.020 | 0.007 | 0.012 | 3.2 | 1.59 | 1.36 | 0.0197 | 0.01 | - | - | - | - | 0.0014 | Comparative Example |
| 14 | b | C | 0.60 | 0.35 | 24.8 | 0.019 | 0.007 | 0.013 | 3.1 | 1.61 | 1.35 | 0.1488 | 0.01 | - | - | - | - | 0.0013 | Invention Example |
| 15 | c | D | 0.46 | 0.44 | 17.7 | 0.020 | 0.017 | 0.008 | 2.6 | 1.07 | 1.48 | 0.0091 | - | 0.010 | 0.020 | - | 0.17 | 0.0005 | Comparative Example |
| 16 | c | D | 0.47 | 0.45 | 17.4 | 0.020 | 0.017 | 0.006 | 2.6 | 1.11 | 1.49 | 0.0896 | - | 0.010 | 0.020 | - | 0.18 | 0.0005 | Invention Example |
| 17 | c | D | 0.47 | 0.45 | 17.3 | 0.020 | 0.017 | 0.008 | 2.5 | 1.12 | 1.49 | 0.1694 | - | 0.010 | 0.020 | - | 0.17 | 0.0005 | Comparative Example |
| 18 | d | E | 0.31 | 0.24 | 27.0 | 0.022 | 0.015 | 0.004 | 3.8 | 0.00 | 0.16 | 0.0035 | - | - | - | - | - | 0.0006 | Comparative Example |
| 19 | d | E | 0.28 | 0.24 | 25.8 | 0.021 | 0.016 | 0.004 | 3.7 | 0.00 | 0.17 | 0.0448 | - | - | - | - | - | 0.0006 | Comparative Example |
| 20 | e | C | 0.53 | 0.35 | 21.4 | 0.019 | 0.007 | 0.012 | 3.0 | 2.01 | 1.83 | 0.0196 | - | - | - | - | - | 0.0012 | Comparative Example |
| 21 | e | C | 0.55 | 0.34 | 20.9 | 0.018 | 0.007 | 0.012 | 3.1 | 2.13 | 1.76 | 0.0943 | - | - | - | - | - | 0.0012 | Invention Example |
| 22 | e | C | 0.50 | 0.34 | 20.7 | 0.018 | 0.007 | 0.012 | 3.1 | 2.01 | 1.87 | 0.1472 | - | - | - | - | - | 0.0012 | Invention Example |
| 23 | e | D | 0.49 | 0.51 | 17.8 | 0.020 | 0.017 | 0.004 | 2.5 | 1.49 | 2.07 | 0.0163 | - | 0.010 | 0.020 | - | 0.18 | 0.0007 | Comparative Example |
| 24 | e | F | 0.34 | 0.40 | 24.0 | 0.019 | 0.016 | 0.028 | 3.9 | 1.57 | 1.63 | 0.1342 | 0.01 | - | 0.020 | - | - | 0.0010 | Invention Example |
| 25 | e | F | 0.37 | 0.40 | 23.7 | 0.019 | 0.016 | 0.029 | 3.9 | 1.57 | 1.65 | 0.2129 | 0.01 | - | 0.020 | - | - | 0.0010 | Comparative Example |
| 26 | e | F | 0.34 | 0.40 | 24.0 | 0.019 | 0.016 | 0.028 | 3.9 | 1.58 | 1.63 | 0.2820 | 0.01 | - | 0.020 | - | - | 0.0010 | Comparative Example |

| | | | | | | | | | | | | | | | | | | | |
|---|---|---|---|---|---|---|---|---|---|---|---|---|---|---|---|---|---|---|---|
| Note: "-" means under the analytical lower limit | | | | | | | | | | | | | | | | | | | |

### [Evaluation of Hot Cracking Resistance]

After the welding, a 10 mm macro test specimen was sampled from the center position in the direction of the welding line by a microcutter such that the surface to be observed was a cross-section perpendicular to the welding line, and the cross-section of the weld metal was observed under an optical microscope (30x) to determine whether or not there were any hot cracks. For hot cracks, any openings that were observed in an optical micrograph of the structure were determined as hot cracks. When formation of a hot crack was recognized, the evaluation result for hot cracks is "present." When formation of hot cracks was not recognized, the evaluation result is "absent."

### [Mechanical Properties of Weld Metal]

From each of the obtained weld metals, a tensile test specimen (having a diameter of 6 mm at the parallel portion) and a Charpy impact test specimen (V-notch) were sampled in accordance with the specifications of JIS Z 3111: 2005, and a tensile test and an impact test were performed. The sampling position of the test specimen (V-notches) is shown in Fig. 2. The direction of a V-notch 8 of a test specimen 6 is perpendicular to the surface of the base metal 1. The test specimen 6 was sampled such that a centerline 7 of the test specimen 6 passes through the position of the middle point of the plate thickness t of the base metal 1 (t/2) and that the position of the V-notch 8 coincides with the position of the middle point between fusion lines 5 of the weld metal 2 (the center of the weld metal).

The tensile test was performed on three test specimens for each weld metal at room temperature, and an average value of the obtained values of 0.2% proof stress Rp0.2 as yield stress and an average value of the obtained values of tensile strength TS were regarded as the tensile properties of the weld metal using that wire. Here, depending on the difference in the type of the shielding gas or in the solid wire, those weld metals that achieved an average of 20 MPa or more improvement on the yield stress ΔRp0.2 and the tensile strength ΔTS at room temperature (25°C) so as to have yield stress as the 0.2% proof stress of 400 MPa or higher and tensile strength of 600 MPa or higher were evaluated as having favorable mechanical properties.

The Charpy impact test was performed on three test specimens for each weld metal, and the absorbing energy at a test temperature of -196°C (ᵥE-₁₉₆) was obtained, and the average value was regarded as the cryogenic impact toughness of the weld metal using that wire. Those weld metals of which the absorbing energy in the Charpy impact test at -196°C was 28 J or higher was evaluated as having excellent cryogenic impact toughness.

The obtained result is shown in Table 5.

**[Table 5]**

| Weld Joint | Steel Material | Wire | N Content in weld metal | Evaluation on Pit and Blowhole | Evaluation on Hot Crack | Weld Metal Properties* | | | | | Remarks |
|---|---|---|---|---|---|---|---|---|---|---|---|
| | | | | | | Rp0.2 | Δ Rp0.2 | TS | Δ TS | ᵥE₋₁₉₆ | |
| No. | No. | No. | mass% | Present/absent | Present/absent | MPa | MPa | MPa | MPa | J | |
| 1 | a | A | 0.0135 | Absent | Present | 403 | - | 778 | - | 68 | Comparative Example |
| 2 | a | A | 0.0890 | Absent | Absent | 441 | 38 | 803 | 25 | 67 | Invention Example |
| 3 | a | A | 0.1370 | Absent | Absent | 460 | 57 | 819 | 41 | 51 | Invention Example |
| 4 | a | A | 0.1593 | Present | Absent | 485 | 82 | 830 | 52 | 42 | Comparative Example |
| 5 | a | A | 0.1802 | Present | Absent | 504 | 101 | 835 | 57 | 27 | Comparative Example |
| 6 | b | A | 0.0122 | Absent | Absent | 401 | - | 775 | - | 85 | Comparative Example |
| 7 | b | A | 0.0815 | Absent | Absent | 447 | 46 | 813 | 38 | 61 | Invention Example |
| 8 | b | A | 0.1461 | Absent | Absent | 469 | 68 | 820 | 45 | 51 | Invention Example |
| 9 | b | A | 0.1678 | Present | Absent | 492 | 91 | 826 | 51 | 39 | Comparative Example |
| 10 | b | A | 0.1832 | Present | Absent | 504 | 103 | 831 | 56 | 26 | Comparative Example |
| 11 | a | B | 0.0196 | Absent | Absent | 413 | - | 788 | - | 80 | Comparative Example |
| 12 | a | B | 0.1090 | Absent | Absent | 456 | 43 | 814 | 26 | 52 | Invention Example |
| 13 | b | C | 0.0197 | Absent | Present | 412 | - | 786 | - | 68 | Comparative Example |
| 14 | b | C | 0.1488 | Absent | Absent | 475 | 63 | 827 | 41 | 56 | Invention Example |
| 15 | c | D | 0.0091 | Absent | Absent | 411 | - | 781 | - | 84 | Comparative Example |
| 16 | c | D | 0.0896 | Absent | Absent | 451 | 40 | 805 | 24 | 61 | Invention Example |
| 17 | c | D | 0.1694 | Present | Absent | 488 | 77 | 824 | 43 | 41 | Comparative Example |
| 18 | d | E | 0.0035 | Absent | Absent | 376 | - | 758 | - | 65 | Comparative Example |
| 19 | d | E | 0.0448 | Absent | Absent | 399 | 23 | 772 | 14 | 54 | Comparative Example |
| 20 | e | C | 0.0196 | Absent | Absent | 421 | - | 793 | - | 70 | Comparative Example |
| 21 | e | C | 0.0943 | Absent | Absent | 456 | 35 | 813 | 20 | 52 | Invention Example |
| 22 | e | C | 0.1472 | Absent | Absent | 478 | 57 | 822 | 29 | 39 | Invention Example |
| 23 | e | D | 0.0163 | Absent | Present | 412 | - | 794 | - | 55 | Comparative Example |
| 24 | e | F | 0.1342 | Absent | Absent | 471 | 59 | 831 | 37 | 49 | Invention Example |
| 25 | e | F | 0.2129 | Present | Absent | 530 | 118 | 853 | 59 | 21 | Comparative Example |
| 26 | e | F | 0.2820 | Present | Absent | 542 | 130 | 856 | 62 | 18 | Comparative Example |

| | | | | | | | | | | | |
|---|---|---|---|---|---|---|---|---|---|---|---|
| *) In accordance with JIS Z 3111: 2005 | | | | | | | | | | | |

As Comparative Examples, joints Nos. 1, 6, 11, 13, 15, 18, 20, and 23 show the properties of joints that were produced by ordinary gas metal arc welding for which the shielding gas did not contain nitrogen gas.

The weld joints indicated as Invention Example in the remarks column are all weld joints that are free of formation of hot cracks during welding and have excellent hot cracking resistance. Compared with the ordinary gas metal arc weld joints for which the shielding gas did not contain nitrogen gas, the yield stress (0.2% proof stress) ΔRp0.2 and the tensile strength ΔTS at room temperature (25°C) of the weld metal improved by 20 MPa or more on average. In addition, excellent cryogenic impact toughness was achieved.

Here, the difference (an average of 20 MPa or more improvement) in the 0.2% proof stress ΔRp0.2 and the tensile strength ΔTS between the weld joint produced using the shielding gas not containing nitrogen gas and the weld joint produced using the shielding gas containing nitrogen gas will be further described based on the data of Table 5. For example, joints Nos. 1 to 5 of Table 5 are all joints that were produced using steel material No. a and wire No. A. However, the type of the shielding gas is, for joint No. 1, a gas composed only of carbon dioxide gas and not containing nitrogen gas, and for joints Nos. 2 to 5, a gas containing 10 vol% to 40 vol% nitrogen gas. When the deposit metal properties of the obtained joints were examined, the 0.2% proof stress of joint No. 1 (no nitrogen gas) was 403 MPa, while that of joint No. 2 (containing 10 vol% nitrogen gas) was 441 MPa, and thus the difference was 38 MPa. The tensile strength of joint No. 1 was 778 MPa, while that of joint No. 2 was 803 MPa, and thus the difference was 25 MPa. Further, in the case of joint No. 3 (containing 20 vol% nitrogen gas), the 0.2% proof stress was 460 MPa and the difference from that of joint No. 1 was 57 MPa. The tensile strength was 819 MPa, and the difference from that of joint No. 1 was 41 MPa. Similarly, in the case of joint No. 4 (containing 30 vol% nitrogen gas), the difference in the 0.2% proof stress was 82 MPa and the difference in the tensile strength was 52 MPa. In the case of joint No. 5 (containing 40 vol% nitrogen gas), the difference in the 0.2% proof stress was 101 MPa and the difference in the tensile strength was 57 MPa. Thus, when nitrogen gas was contained in the shielding gas, the tensile strength and the 0.2% proof stress improved according to the content of the nitrogen gas.

For joints Nos. 4, 5, 9, 10, and 17, the content of the nitrogen gas in the shielding gas was so high that a large number of pits and blowholes formed, which made these joints inadequate as weld joints.

Further, joints Nos. 18 and 19 are examples of weld joints created by using a steel material and a solid wire used in the production method of the weld joint according to the present invention, namely, steel material No. d having a chemical composition outside the specified ranges of the present invention and solid wire No. E having a chemical composition outside the preferable ranges. Joint No. 18, for which the shielding gas did not contain nitrogen gas, failed to achieve 0.2% proof stress that is deemed preferable in the present invention. However, it was found that when nitrogen gas was contained in the shielding gas as with joint No. 19, the content of N in the weld metal increased as in other examples, thus producing a strength improving effect.

Compared with joint No. 23 that was created by gas metal arc welding for which the shielding gas did not contain nitrogen gas, in joint No. 24 for which wire No. F having a similar composition and increased in the content of N (0.3290%) was used, even though the shielding gas did not contain nitrogen gas, the content of N in the weld metal fell within the specified range of the present invention, and the difference in the 0.2% proof stress was 59 MPa and the difference in the tensile strength was 37 MPa. Further, in joints No. 25 and No. 26 for which shielding gases containing 20% and 40% nitrogen gas were used, as the content of N in the weld metal exceeded the upper limit of the specified range, blowholes formed, making the joints inadequate.

### [Relationship between Strength of Weld Metal and Content of Nitrogen in Shielding Gas or Content of N in Wire]

Based on the data of Table 5, changes in the 0.2% proof stress and changes in the tensile strength relative to the content of N in the weld metal were sorted by the method of adding N, which was either the method that adds N by mixing nitrogen gas in the shielding gas or the method that adds N by increasing the content of N in the wire.

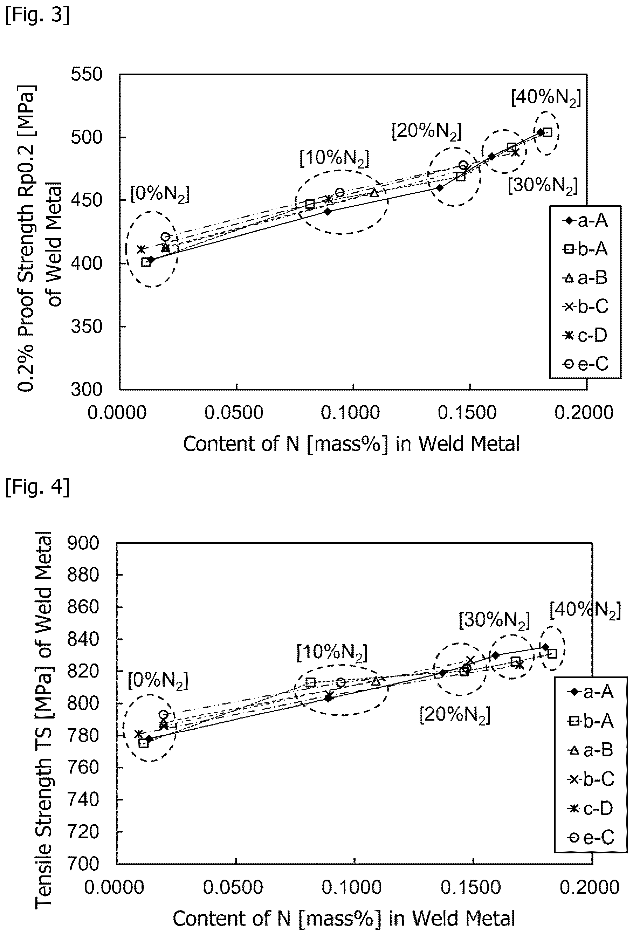

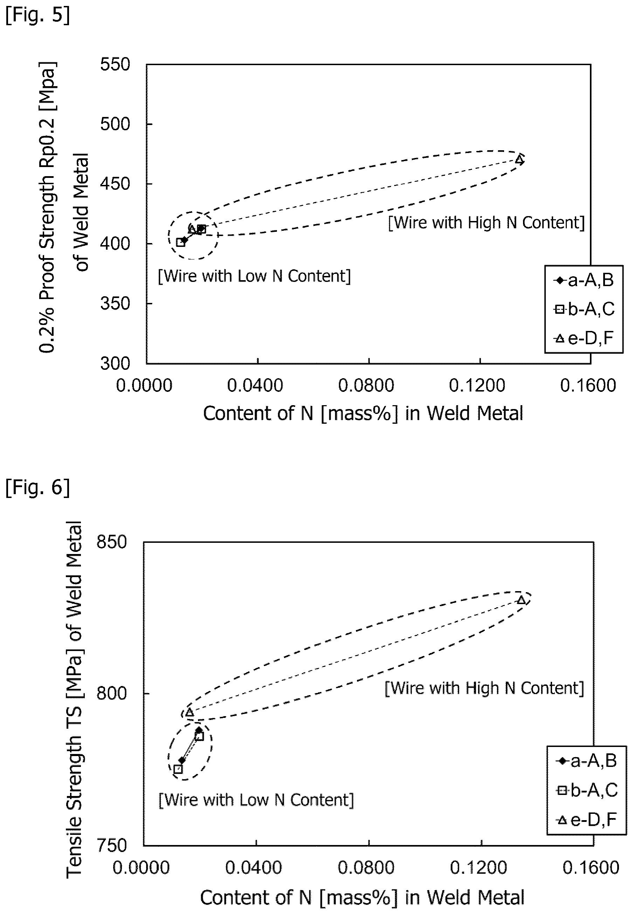

Fig. 3 is a view showing changes in the 0.2% proof stress relative to the content of N in the weld metal according to changes in the content of the nitrogen gas, and Fig. 4 is a view showing changes in the tensile strength relative to the content of N in the weld metal according to changes in the content of nitrogen gas. Fig. 5 is a view showing changes in the 0.2% proof stress relative to the content of N in the weld metal according to changes in the content of N in the wire, and Fig. 6 is a view showing changes in the tensile strength relative to the content of N in the weld metal according to changes in the content of N in the wire. Here, the data were sorted by, for Fig. 3 and Fig. 4, grouping the data by the condition of the content of nitrogen in the shielding gas, and for Fig. 5 and Fig. 6, grouping the data according to the level of the content of N in the wire.

As can be seen from Fig. 3, when using a combination of the same steel material and the same wire and changing the content of the nitrogen gas in the shielding gas, the 0.2% proof stress becomes higher when 10 vol% nitrogen gas is contained, and even higher when 20 vol% nitrogen gas is contained, than when no nitrogen gas is contained. This is exactly the same in the case of the tensile strength of Fig. 4: as the content of nitrogen increases to 10 vol% and to 20 vol%, the tensile strength becomes higher. It can be seen that in Fig. 5 and Fig. 6, similarly, as the content of N in the wire increases, the content of N in the weld metal increases and the strength improves accordingly. These results confirmed that increasing the content of N in the weld metal of the present invention is effective for improving the strength of the weld metal.

### Reference Signs List

- 1: Base metal (steel material)
- 2: Weld metal
- 3: Weld metal layer
- 4: Hot crack
- 5: Fusion line
- 6: Test specimen
- 7: Centerline of test specimen
- 8: Position of V-notch
- t: Plate thickness

## Claims

1. A gas metal arc weld joint of pieces of a steel material that is created by forming a weld metal using a shielding gas and a solid wire, **characterized in that**:
the steel material is austenitic steel with a high Mn content;
a chemical composition of the steel material includes, in mass%,
C: 0.10% to 0.70%,
Si: 0.05% to 1.00%,
Mn: 18.0% to 30.0%,
P: 0.030% or less,
S: 0.007% or less,
Al: 0.010% to 0.070%,
Cr: 2.50% to 7.00%,
N: 0.0050% to 0.0500%, and
O (oxygen): 0.0050% or less, and
further includes, optionally and selectively, at least one type selected from the group consisting of
Mo: 0.01% to 2.00%,
V: 0.01% to 2.00%,
W: 0.01% to 2.00%,
Ni: 0.01% to 4.00%,
REM: 0.0010% to 0.0200%, and
B: 0.0003% to 0.0030%,
with the balance being composed of Fe and unavoidable impurities; and
a chemical composition of the weld metal includes, in mass%,
C: 0.15% to 0.80%,
Si: 0.10% to 1.00%,
Mn: 17.0% to 30.0%,
P: 0.030% or less,
S: 0.030% or less,
Al: 0.001% to 0.100%,
Cr: 0.4% to 5.5%,
Mo: 0.01% to 3.50%,
Ni: 0.01% to 10.00%, and
N: 0.0200% to 0.1500%, and
further includes, optionally and selectively, at least one type selected from the group consisting of
V: 0.01% to 1.00%,
Ti: 0.010% to 1.000%,
Nb: 0.010% to 1.000%,
W: 0.01% to 1.00%,
Cu: 0.01% to 1.00%, and
B: 0.0015% or less,
with the balance being composed of Fe and unavoidable impurities.

2. The gas metal arc weld joint according to claim 1, wherein
the weld metal has the following mechanical properties: yield stress as 0.2% proof stress of 400 MPa or higher, tensile strength of 600 MPa or higher, and Charpy impact absorbing energy ᵥE₋₁₉₆ of 28 J or higher.

3. A method of producing the gas metal arc weld joint according to claim 1 or 2, wherein
[A] the shielding gas is a gas that contains, in vol%, 1.0% or more but less than 30.0% nitrogen gas, with the balance being composed of carbon dioxide gas and unavoidable impurities, or
[B] the shielding gas is a gas that contains, in vol%, 1.0% or more but less than 30.0% nitrogen gas and 56.0% or more but less than 79.2% Ar gas, with the balance being composed of carbon dioxide gas and unavoidable impurities.

4. The method of producing the gas metal arc weld joint according to claim 3, wherein
a content of N in the solid wire is 0.1200% or less in mass%.

5. A method of producing the gas metal arc weld joint according to claim 1 or 2, wherein
the shielding gas is a gas composed of carbon dioxide gas and unavoidable impurities or a gas composed of Ar gas, carbon dioxide gas, and unavoidable impurities, and
a content of N in the solid wire is within a range of more than 0.1200% to 0.4000% or less in mass%.
